# EUROPEAN PATENT APPLICATION

(11) **EP 2 166 349 A1**
(43) Date of publication of application: **24.03.2010**
(21) Application number: 08164792.7
(22) Date of filing: 22.09.2008
(51) Int. Cl.: G01N 30/60, G01N 30/02

(54) **Sample distribution device of samples in liquid chromatographs**

(71) Applicant: Bia Separations D.O.O., 61000 Ljubljana (SI)
(72) Inventor: The designation of the inventor has not yet been filed
(74) Representative: von Kirschbaum, Alexander

(57) **Abstract**

A sample distribution device for distribution of samples in liquid chromatographs comprises a sample supply channel (10) arranged in a holding element (12). The holding element (12) includes a receiving chamber (14), with the sample supply channel (10) leading into the receiving chamber (14). Internally of receiving chamber (14), a distributing element (16) is arranged. The passage openings (22) for passage of the sample are formed by an inner side (18) of the receiving chamber (14) and by an outer side (20) of the distributing element (16); preferably, for this purpose, the distributing element (16) has recesses on the outer side. The sample distribution device is arranged in a device for liquid chromatography, wherein the sample will flow radially through the chromatography resin (44).

## Description

The present invention relates to a sample distribution device for distribution of samples in liquid chromatographs, and a device for liquid chromatography.

Devices for liquid chromatography comprise a chromatography resin arranged in a housing. The liquid to be examined will be passed through the chromatography resin. For performing this procedure, it is known to introduce the liquid under examination at an end side of the cylindrical chromatography resin and, after chromatography has been completed, to discharge the liquid via the opposite end side. For safeguarding an equal distribution of the liquid from end side to end side, it is known to provide sample distribution devices.

Such a sample distribution device, having a disk-like shape, is known from DE 41 18 501. Said known sample distribution device comprises, in a top region thereof, a plurality of concentric annular channels connected to each other via radial channels. Said channel structure arranged in the top region is connected to the bottom region of the sample distribution device via bores extending in the axial direction. The bottom region in turn is provided with channels which, starting from the bores which are arranged on a circular line, are guided towards the inside in a star-shaped configuration. Disadvantageously, however, in this sample distribution device, the provision of channels on both sides of the sample distribution device and the provision of through-going channels which must be arranged in correspondence with said channels provided on said two sides, will cause considerable complexity and thus also high expenses.

It is an object of the invention to provide a sample distribution device which is as simple as possible and therefore inexpensive, as well as a corresponding device for liquid chromatography.

According to the invention, the above object is achieved by a sample distribution device as defined in claim 1 and by a device for liquid chromatography as defined in claim 10.

The inventive sample distribution device for distribution of samples in liquid chromatographs comprises a holding element provided with a sample supply channel. The holding element includes a receiving chamber, with the sample supply channel leading thereinto. In the receiving chamber, a distributing element is arranged, which in its most preferred embodiment is plate-shaped. According to the invention, passage openings are formed by an inner side, particularly an axially extending side wall, of the receiving chamber, and by an outer side of the distributing element opposite to said inner side. These passage openings serve for flow of the sample therethrough. For this reason, the passage openings are preferably provided on an outer side of the preferably plate-shaped distributing element. With particular preference, the inventive sample distribution device is used for chromatography resins wherein the liquid is guided to flow radially through the chromatography resin. The sample distribution device will effect a distribution of the sample, preferably from a central point of the distributing element towards the outside, whereupon the sample, when reaching the outer edge of the distributing element, will flow through passage openings formed by the inner side of the receiving chamber and by the outer side of the distributing element. Then, for instance, the sample will reach an annular, cylindrical space surrounding the chromatography resin, and will then radially pass through the chromatography resin and enter an axially extending space or channel arranged within the chromatography resin. Via said space or channel, the sample can then be discharged.

According to a preferred embodiment, the passage openings are formed by recesses in the outer side of the distributing element and/or by recesses in the inner side of the receiving chamber. For instance, the receiving chamber has a smooth, cylindrical inner side adapted to cooperate with an outer side of the distributing element that is provided with recesses, resulting in the formation of passage openings. Thus, for instance, the inventive distributing element comprises recesses exclusively on its outer side. A provision of complex channels and through-going bores is not required anymore. Thus, the distributing element can be manufactured at considerably less expense.

With particular preference, the recesses are arranged on the outer side of the distributing element in a regular configuration so as to guarantee a uniform distribution of the sample. Preferably, the recesses are formed to extend in outward directions towards the inner side of the receiving chamber. Thus, the recesses are defined in the intervening spaces between the teeth of a toothed wheel.

Between the recesses, intermediate webs are provided. At least some of the intermediate webs have suitable dimensions to the effect that the respective intermediate webs are arranged in abutment on the inner side of the receiving chamber. This makes it possible, provided that the intermediate webs have a corresponding design, to realize an automatic centering or positional definition of the distributing element in the receiving chamber, which can be effected in a simple manner.

The present invention further relates to a device for liquid chromatography, comprising a housing with a chromatography resin arranged therein. Connected to the housing is a sample distribution device as described above. Preferably, in this arrangement, the holding element of the sample distribution device is fastened to the housing. According to the invention, the distributing element is arranged at an end side of the chromatography resin and is preferably located in abutment thereon. In case of a chromatography resin having e.g. a circular cylindrical shape, the distributing element has a larger diameter so that the passage openings between the inner side of the receiving chamber of the distributing device and the outer side of the distributing element are arranged radially outside the chromatography resin. Via these passage openings, the liquid will flow into a space surrounding the chromatography resin. From this space, the liquid will pass in radial directions through the chromatography resin and will enter a discharge channel arranged within the chromatography resin and provided for discharge of the separated sample.

A preferred embodiment of the invention will be explained in greater detail hereunder with reference to the accompanying drawings.
- Fig. 1: shows a schematic longitudinal sectional view of a device for liquid chromatography according to the invention;
- Fig. 2: shows a schematic longitudinal sectional view of a sample distribution device;
- Fig.3: shows a schematic plan view of a distributing element of the distributing device of Fig. 2 as viewed in the direction indicated by the arrow III in Fig. 2;
- Fig. 4: shows an enlarged view of the region marked by IV in Fig. 3; and
- Fig. 5: shows a schematic lateral view the distributing element of Fig. 3 as viewed in the direction indicated by the arrow V in Fig. 3,

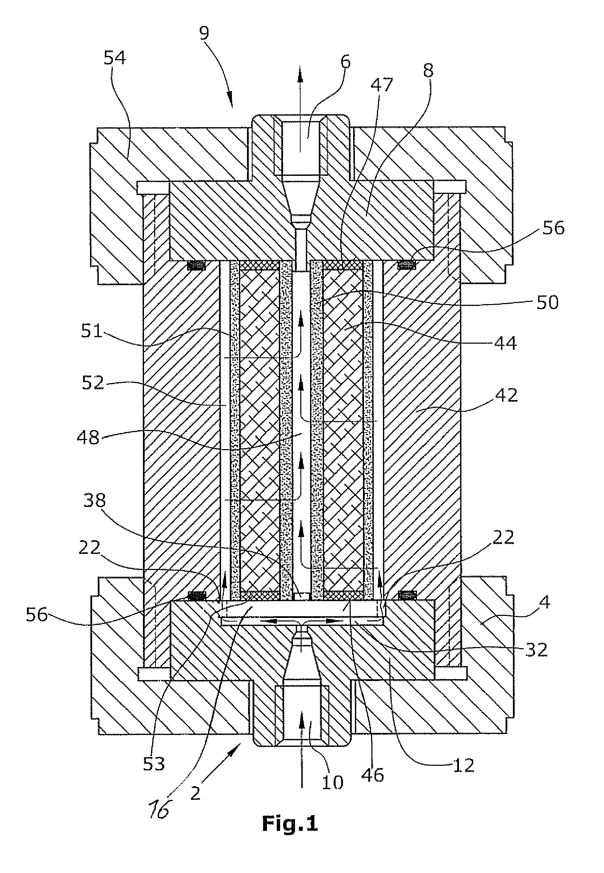

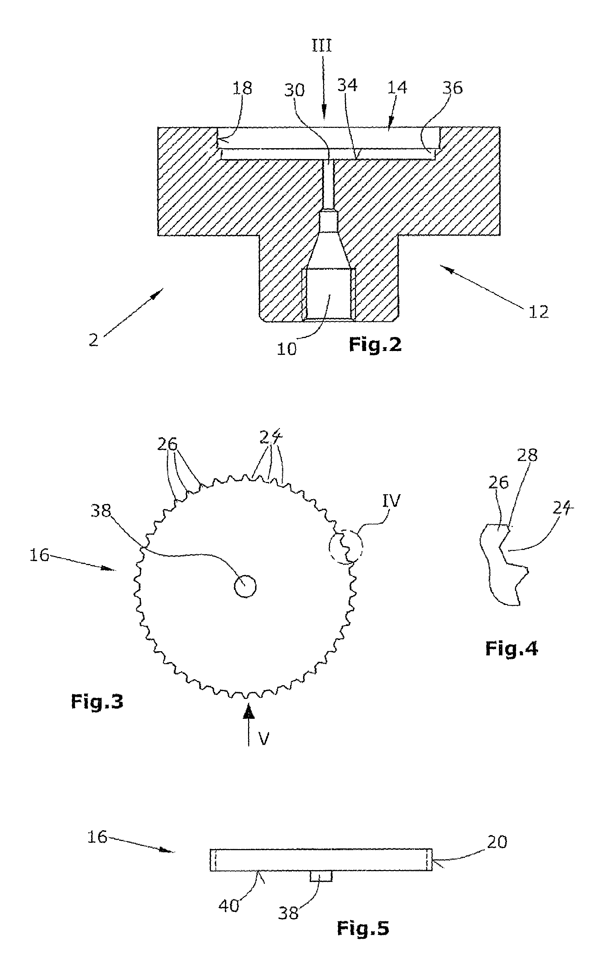

A device for liquid chromatography as illustrated in Fig. 1 comprises a sample distributing device 2 (Fig. 2). Sample distributing device 2 comprises a sample supply channel 10 for conveyance of the liquid therethrough into a receiving chamber 14. In the illustrated embodiment, receiving chamber 14 accommodates a distributing element 16 (Fig. 3) which in the illustrated embodiment is formed as a cylindrical plate.

The sample distributing device 2 is fastened, by a fixing element such as e.g. a coupling nut 4 (Fig. 1), to a housing 42 having a substantially cylindrical outer contour. Internally of housing 42, a chromatography resin 44 is arranged. Chromatography resin 44 has an outer diameter smaller than the inner diameter of the cavity within the housing, resulting in the formation of an annular chamber 52 surrounding the resin 44. Said chamber 52 will receive the inflowing liquid via the distribution device 2, the function of the latter being still to be described further below.

From chamber 52, the liquid will radially move through an outer frit 51, arranged to surround resin 44, towards the inside in the direction towards a discharge channel 48. Discharge channel 48, extending in the longitudinal direction of resin 44, is lined by an inner frit 50.

Discharge channel 48 which, as mentioned above, is oriented in the longitudinal direction of resin 44, is connected to a channel 6 formed in a discharge element 9. Discharge element 9 is fastened to housing 42 by a coupling nut or fixing element 54 in a manner similar to the attachment of sample distributing device 2.

Between holding element 8 and also holding element 12 of sample distributing device 2, on the one hand, and housing 42 on the other hand, respective sealings 52 are provided, e.g. in the form of O-rings. Further, respective sealings 53 are provided on the end sides of resin 44.

The sample distributing device 2 (Fig. 2) is - as holds true, in a preferred embodiment, for the whole device shown in Fig.1 - configured with rotational symmetry. Channel 10 opens into receiving chamber 14 having the distributing element 16 (not shown in Fig. 2) arranged therein. Receiving chamber 14 is cylindrical, with an inner side 18 of receiving chamber 14 having a stepped shape to the effect that a step or spacer element 36 is formed. The distributing element 16, to be placed from above into the receiving chamber 14 as illustrated in Fig. 2, will thus be arranged in abutment on the step or spacer element 36. In this manner, a distributing chamber 32 (Fig. 1) is formed into which the fluid will flow at the beginning of the process.

Within distributing chamber 32, the fluid is distributed in radially outward directions as schematically indicated by the arrows in Fig. 1, and will then, via the passage openings 22, proceed to enter the chamber 52 surrounding the resin 44. Thus, the distributing chamber 32 is formed by a base surface 34 of receiving chamber 14 and a surface of distributing element 16. In the illustrated embodiment, the passage openings 22 are defined by tapering projections or tooth-shaped intermediate webs 26 of distributing element 16 and by the inner side 18 of receiving chamber 14. The intermediate webs 26 are arranged on the outer side 20 of distributing element 16 and thus are directed radially outwards. The tips 28 of the webs 26 contact the inner side 18 so that the circumference of distributing element 16 is provided with a number of passage openings 22 distributed on said circumference in a uniform configuration.

On an outer side 40 (Fig. 5) of distributing element 16 facing towards the chromatography resin 44, a cylindrical pin or projection 38, located centrally on said side 40, is provided. In the mounted condition, said pin or projection 38 projects into discharge channel 48 which itself extends in the longitudinal direction of the resin. Thus, pin or projection 38 serves for centering the resin 44.

## Claims

1. A sample distribution device for distribution of samples in liquid chromatographs, comprising
a holding element (12) provided with a sample supply channel (10),
a receiving chamber (14) arranged in the holding element (12), the sample supply channel (10) leading into the receiving chamber (14),
a distributing element (16) arranged in the receiving chamber (14), and
passage openings (22) formed by an inner side (18) of the receiving chamber (14) and by an outer side (20) of the distributing element (16) and provided to have the sample flowing therethrough.

2. The sample distribution device according to claim 1, **characterized in that** the passage openings (22) are formed by recesses (24) on the outer side (20) of the distributing element (16) and/or by recesses on the inner side (18) of the receiving chamber (14).

3. The sample distribution device according to claim 1 or 2, **characterized in that** the inner side (18) of the receiving chamber (14) is smooth and/or cylindrical.

4. The sample distribution device according to any one of claims 1 to 3, **characterized in that** the recesses (24) on the outer side (20) of the distributing element (16) are arranged at regular distances and/ or are widening outwardly in the direction of the inner side (18) of the receiving chamber (14).

5. The sample distribution device according to any one of claims 2 to 4, **characterized in that** at least some of a number of intermediate webs (26) located between adjacent recesses (24) of the distributing element (16) are in abutment on the inner side (18) of the receiving chamber (14) and/ or have preferably an essentially triangular cross section, with a tip (28) pointing in the direction of the inner side (18) of the receiving chamber (14).

6. The sample distribution device according to any one of claims 1 to 5, **characterized in that** the distributing element (16) is plate-shaped and has in particular a substantially circular cross section and/or is exclusively on its outer side (20) provided with recesses (24) forming passage openings (22).

7. The sample distribution device according to any one of claims 1 to 6, **characterized by** a distributing chamber (32) formed between the distributing element (16) and an entrance (30) of the sample supply channel (10), in particular into the receiving chamber (14).

8. The sample distribution device according to claim 7, **characterized in that**, for forming the distributing chamber (32), the distributing element (16) is arranged at a distance from a base surface (34) of the receiving chamber (14), whereby preferably a spacer element (36) is provided between the distributing element (16) and the base surface (34) and being preferably formed by an at least partially stepped inner side (18).

9. The sample distribution device according to any one of claim 1 to 8, **characterized in that** the distributing element (16) is provided with a centering pin (38) which is preferably arranged centrally and, with preference, on an outer side (40) of the distributing element (16) facing away from the sample supply channel (10).

10. A device for liquid chromatography, comprising
a chromatography resin (44) arranged in a housing (42),
a sample distribution device provided according to any one of claims 1 to 9 and connected to the housing (42), said holding element (12) being preferably connected to the housing (42),
said distributing element (16) being arranged adjacent to a front side (46) of the chromatography resin (44) and preferably in abutment thereon, and
a discharge channel (48) connected to, preferably arranged within the chromatography resin (44) for discharging the sample separated in the chromatography resin (44).

11. The device according to claim 10, **characterized in that** said passage openings (22) of the sample distribution device are arranged in a radially outer region of the chromatography resin (44), whereby passage openings (22) are in fluidal connection to a chamber (52), preferably surrounding the chromatography resin (44).

12. The device according to claim 10 or 11, **characterized in that** the chromatography resin (44) is preferably surrounded by an outer frit (51).

13. The device according to any one of the claims 10 to 12, **characterized in that** the chromatography resin (44) is cylindrical and preferably has a circular cylindrical cross section.

14. The device according to any one of claims 10 to 13, **characterized in that** the discharge channel (48) is continuous in the longitudinal direction of the chromatography resin (44) and preferably serves for taking up said centering pin (38) of the distributing element (16).

15. The device according to claim 14, **characterized by** an inner frit (50) lining the discharge channel (48).

16. The device according to any one of the claims 10 to 15, **characterized** optionally by one or more one sealing element(s) (53) covering one or both front wall(s) (46,47) of the chromatography resin (44).
